# EUROPEAN PATENT SPECIFICATION

(11) **EP 4 415 136 B1**
(45) Date of publication and mention of the grant of the patent: **01.07.2026**
(21) Application number: 22878867.5
(22) Date of filing: 05.10.2022
(51) Int. Cl.: H01M 50/20, B65D 25/10, H01M 50/105, H01M 50/211, H01M 50/557, H01M 50/244, H01M 50/256, H01M 50/289, H01M 50/291

(54) **SECONDARY BATTERY TRAY**
SEKUNDÄRBATTERIETRÄGER
PLATEAU DE BATTERIE SECONDAIRE

(30) Priority: 05.10.2021 KR 20210132001
(43) Date of publication of application: 14.08.2024
(60) Divisional application: 25207294.7
(73) Proprietor: LG Energy Solution, Ltd., Seoul 07335 (KR)
(72) Inventor: HONG, Sung Guk, Daejeon 34122 (KR)
(74) Representative: Goddar, Heinz J.
(86) International application number: PCT/KR2022/014947
(87) International publication number: WO 2023/059046

(56) References cited:
- KR-A- 20200 128 823
- KR-A- 20200 140 578
- KR-A- 20210 064 935
- KR-B1- 101 404 685
- KR-B1- 101 404 685
- KR-B1- 102 191 403
- US-A1- 2019 198 952
- US-A1- 2019 237 832

## Description

### TECHNICAL FIELD

### Cross-reference to Related Applications

The present application claims the benefit of the priority of Korean Patent Application No. 10-2021-0132001, filed on October 5, 2021.

### Technical Field

The present disclosure relates to a secondary battery tray, and more particularly, to a secondary battery tray that minimizes damage of a corner portion of a secondary battery during transfer of the secondary battery.

### BACKGROUND ART

As prices of energy sources rise due to depletion of fossil fuels and interests about environmental pollution are amplified, a need for eco-friendly alternative energy sources is indispensable for life in the future. In particular, as the technical development of and a demand for mobile devices increase, a demand for secondary batteries as energy sources rapidly increases.

As representative examples, prismatic type secondary batteries and pouch type secondary batteries, which may have a small thickness to be applied to products such as mobile phones, are in high demand in terms of the shape of batteries, and lithium secondary batteries such as lithium-ion batteries and lithium-ion polymer batteries, which have high energy density, discharge voltage, and output stability, are in high demand in terms of materials.

Generally, in the secondary batteries, an electrode mixture containing an electrode active material is applied to a surface of a collector to make each of a positive electrode and a negative electrode, and a separator is interposed between the positive electrode and the negative electrode to manufacture an electrode assembly. Thereafter, the electrode assembly is mounted in a metal can having a cylindrical or a square shape or a pouch type case made of an aluminum laminate sheet. Then, mainly a liquid electrolyte is injected or impregnated into the electrode assembly or a solid electrolyte is used to manufacture the secondary batteries.

The secondary batteries may be also classified according to the configuration of an electrode assembly of a positive electrode/separator/negative electrode structure. Representative examples may include a jelly-roll-type (wound type) electrode assembly having a structure in which long sheet-shaped positive electrodes and negative electrodes are wound with a separator interposed therebetween, a stacked type electrode assembly in which a plurality of positive and negative electrodes cut into units having a predetermined size are stacked in sequence with a separator interposed therebetween, a stacked/folded type electrode assembly having a structure in which bi-cells or full-cells having positive and negative electrodes in a predetermined unit stacked with a separator interposed therebetween are wound with a separator sheet, and so on.

Such secondary batteries are manufactured through multiple processes, are accommodated in a tray and transferred to a place for performing each process or accommodated and stored in the tray as a standby state before the transfer.

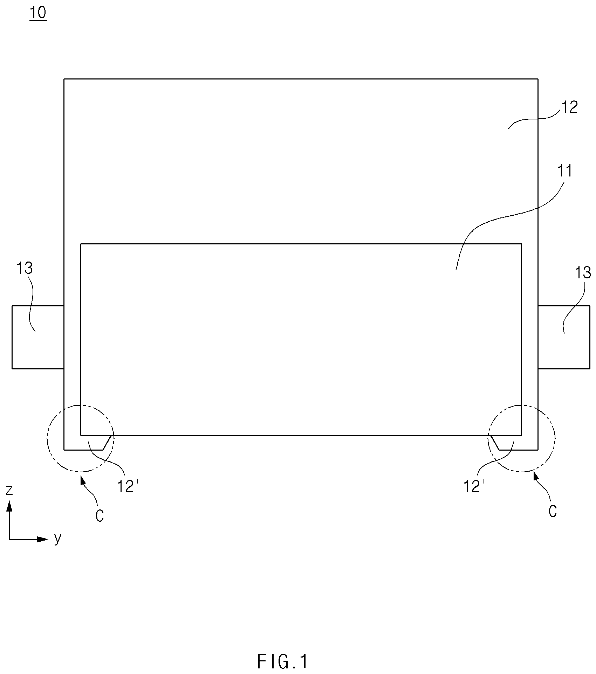

During the transfer, however, the secondary batteries accommodated in the tray may move inside the tray by an external impact or vibration to cause collision between the tray and the secondary batteries. Accordingly, an impact may be applied to the secondary batteries, and thus appearance defects such as dents and scratches, may occur in an outer appearance of the secondary batteries. In particular, as illustrated in FIG. 1, stress concentrates at a secondary battery corner portion C during the transfer of the secondary batteries to cause a problem that cracks occur.

As the cracks cause defects in quality and performance of the secondary batteries, there is a need for the technical development to minimize the occurrence of the cracks at the secondary battery corner portion C during the transfer of the secondary batteries.

US 2019/0237832 A1 describes a secondary battery module including a plurality of pouch type secondary batteries stacked in parallel, a cooling plate configured to cool the plurality of stacked pouch type secondary batteries , and a case arranged on an upper side of the plurality of secondary batteries which is opposite the cooling plate. Each of the pouch type secondary batteries includes a sealing portion and a close contact portion formed by an exterior material in an outer periphery thereof. The sealing portion is formed at three of four sides of the pouch type secondary battery and the close contact portion is formed at the other side of the pouch type secondary battery. An extending portion protruding in a direction perpendicular to the close contact portion is formed at a portion of the sealing portion adjacent to the close contact portion , and the cooling plate is brought into contact with the close contact portions of the plurality of stacked pouch type secondary batteries and cools the close contact portions. US 2019/0198952 A1 describes a similar battery module. KR 101404685 B1 describes a battery transporting tray including a housing and a battery mounting portion. The battery mounting portion comprises a horizontally extending fixing part on which a vertically extending battery insertion part for a plurality of batteries is fixed.

### DISCLOSURE OF THE INVENTION

### TECHNICAL PROBLEM

The present invention has been devised to solve the problems as above and an object of the present invention is to provide a secondary battery tray capable of minimizing damage of a secondary battery corner portion during transfer of a secondary battery.

### TECHNICAL SOLUTION

The present invention provides a secondary battery tray that accommodates a secondary battery including an electrode assembly and a pouch in which the electrode assembly is accommodated. The secondary battery tray comprises a frame part, in which an accommodation space in which the secondary battery is accommodated is defined, and a support which is provided in the accommodation space to support the secondary battery, wherein the support is provided so as to be spaced apart from a corner portion of the secondary battery, at which an edge of the electrode assembly is disposed. The support is detachably provided in the frame part as a separate component from the frame part.

The support may include a side surface support, which supports a side surface of the secondary battery and is provided in a pair to face each other, and a lower portion support which supports a lower portion of the secondary battery.

The side surface support may include a support block disposed in an arrangement direction of the secondary battery, a first side surface support provided in plurality to be spaced apart from each other and extending upward from the support block, and a second side surface support protruding from the first side surface support and having one surface disposed to face one side surface of the corner portion of the secondary battery.

In the second side surface support, a region corresponding to the corner portion of the secondary battery may be recessed.

The second side surface support may have a lower portion that is stepped so as to be spaced apart from the corner portion of the secondary battery.

The second side surface support may include a first region having a first width, and a second region having a second width smaller than the first width, and the second region may be disposed in the region corresponding to the corner portion of the secondary battery.

The second side surface support may include a connection region provided between the first region and the second region to connect the first region and the second region to each other, and the connection region may connect the first region and the second region to each other so as to be inclined.

The lower portion support may have both ends, each of which is fixed to the side surface support.

A groove into which the end of the lower portion support is fitted may be defined in the support block, and each of the both ends of the lower portion support may be inserted into the groove of the support block provided in a pair to fix the lower portion support.

The lower portion support may have a top surface stepped.

The lower portion support may include a first region having a first height, and a second region disposed at each of both sides of the first region to have a second height smaller than the first height, and the first region may support a central portion of a lower end of the secondary battery.

The lower portion support may include a connection region provided between the first region and the second region to connect the first region and the second region to each other, and the connection region may connect the first region and the second region to each other so as to be inclined.

The lower portion support may include a synthetic resin material.

### ADVANTAGEOUS EFFECTS

The secondary battery tray according to the present invention has the advantageous effect that the damage of the corner portion of the secondary battery accommodated in the tray to be transferred may be minimized.

As the damage of the corner portion of the secondary battery accommodated in the tray to be transferred is minimized, the secondary battery tray according to the present invention has the advantageous effects that the crack defects that may occur in the corner portion may be improved to secure the quality of the secondary battery and thus, the customer-churn may be prevented.

### BRIEF DESCRIPTION OF THE DRAWINGS

FIG. 1 is a front view illustrating a secondary battery accommodated in a secondary battery tray according to the present invention.
FIG. 2 is a perspective view illustrating a configuration of a secondary battery tray according to Embodiment 1 of the present invention.
FIG. 3 is a plan view illustrating a configuration of the secondary battery tray in FIG. 2 when viewed from an upper side.
FIG. 4 is a cross-sectional view illustrating a cross section in a direction I-I in FIG. 3.
FIG. 5 is an enlarged cross-sectional view illustrating a portion A in FIG. 4.
FIG. 6 is an enlarged cross-sectional view illustrating a portion B in FIG. 4.

### MODE FOR CARRYING OUT THE INVENTION

Hereinafter, preferred embodiments of the present invention will be described in detail with reference to the accompanying drawings to enable those skilled in the art to which the present invention pertains to easily carry out the present invention. The present invention may, however, be embodied in different forms and should not be construed as limited by the embodiments set forth herein.

The parts unrelated to the description, or the detailed descriptions of related well-known art that may unnecessarily obscure subject matters of the present invention, will be ruled out in order to clearly describe the present invention. Like reference numerals refer to like elements throughout the whole specification.

The present invention provides a secondary battery tray 1 that accommodates a secondary battery 10 including an electrode assembly 11 and a pouch 12 in which the electrode assembly 11 is accommodated. The secondary battery tray 1 includes a frame part 100, in which an accommodation space in which the secondary battery 10 is accommodated is defined, and a support 200 that is provided in the accommodation space and supports the secondary battery 10.

Here, as illustrated in FIG. 1, the secondary battery 10 is a component including the electrode assembly 11 and the pouch 12 in which the electrode assembly 11 is accommodated, and may have various configurations.

Here, the electrode assembly 11 may be a stacked type or stacked/folded type electrode assembly in which unit cells, each of which includes a separator interposed between a positive electrode and a negative electrode, are stacked on a separator sheet. The unit cells may be bi-cells, mono-cells, full-cells, or the like. The electrode assembly 11 has an end on which an electrode tab (not shown) is disposed, and the electrode tab (not shown) is connected to an electrode lead 13 drawn out to the outside of the pouch 12.

The pouch 12 is a component, in which the electrode assembly 11 is accommodated, and may have various configurations. Here, the pouch 12 accommodates the electrode assembly 11 and is injected with an electrolyte and then, sealed in a state in which the electrode lead 13 is exposed to the outside, so as to be manufactured. The manufactured secondary battery 10 may be accommodated in the tray 1 so as to be transferred and stand by before and after performing a process.

As illustrated in FIG. 1, the secondary battery 10 may include a corner portion C disposed at an edge position of the electrode assembly 11 accommodated in the pouch 12. Here, the corner portion C of the secondary battery 10 may include a protrusion 12', which protrudes in a downward direction below an edge of the electrode assembly 11, as a surplus portion of the pouch 12 remaining after the sealing of the pouch 12. When the corner portion C of the secondary battery 10 is in contact with the tray 1, there is a problem that stress may concentrate at the corner portion C to cause cracks or damage an outer appearance of the protrusion 12'.

The tray 1 is a component including the frame part, in which the accommodation space in which the secondary battery 10 is accommodated is defined, and the support 200, which is provided in the accommodation space and supports the secondary battery 10, and may have various configurations.

Here, the frame part 100 is a component, in which the accommodation space in which the secondary battery 10 is accommodated is defined, and may have various configurations.

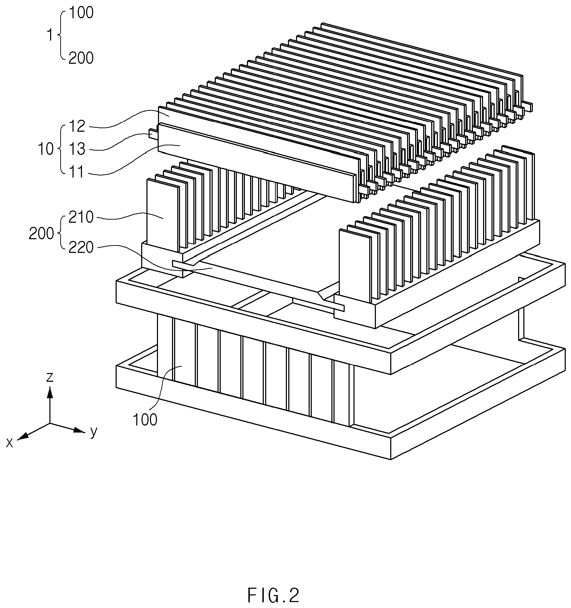

For example, any shape may be applicable to the frame part 100 as long as being a shape in which a space for accommodating the secondary battery 10 and the support 200 is defined in the frame part 100. In one example, as illustrated in FIG. 2, the frame part 100 may have a shape in which a lateral portion thereof is opened at a position corresponding to the electrode lead 13 so that the electrode lead 13 of the secondary battery 10 may be exposed to the outside.

The support 200 is a component provided in the accommodation space to support the secondary battery 10 and may have various configurations.

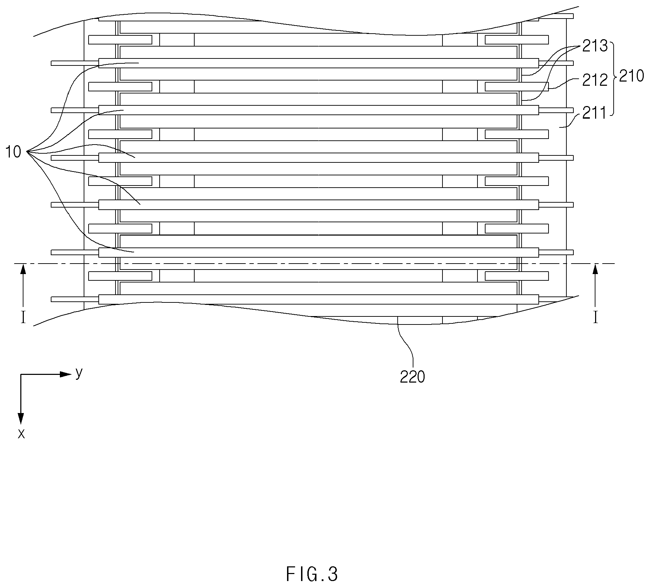

In more detail, as illustrated in FIGS. 2 and 3, the support 200 may support a plurality of secondary batteries 10 so that the plurality of secondary batteries 10 stand vertically in the accommodation space of the frame part 100 and are spaced a predetermined gap from each other to be arranged parallel to each other. Here, as illustrated in FIGS. 2 and 3, the plurality of secondary batteries 10 may be arranged parallel to each other in an X direction on the drawings.

According to an example not forming part of the present invention, the support 200 may be formed integrally with the frame part 100 described above as one component.

The support 200 may be disposed to be spaced apart from the corner portion C of the secondary battery 10, at which an edge of the electrode assembly 11 is disposed. That is, the support 200 is designed to avoid being in contact with the corner portion C of the secondary battery 10 so that even when an impact applies to the secondary battery 10 during the transfer of the secondary battery 10 accommodated in the tray 1, stress may be prevented from concentrating at the corner portion C of the secondary battery 10.

Hereinafter, a corner portion C avoidance structure of the support 200 will be described in more detail.

The support 200 may include a side surface support 210, which supports a side surface of the secondary battery 10 and is provided in a pair to face each other, and a lower portion support 220 which supports a lower portion of the secondary battery 10.

Here, the side surface support 210 is a component, which supports the side surface of the secondary battery 10 and is provided in a pair to face each other, and may have various configurations.

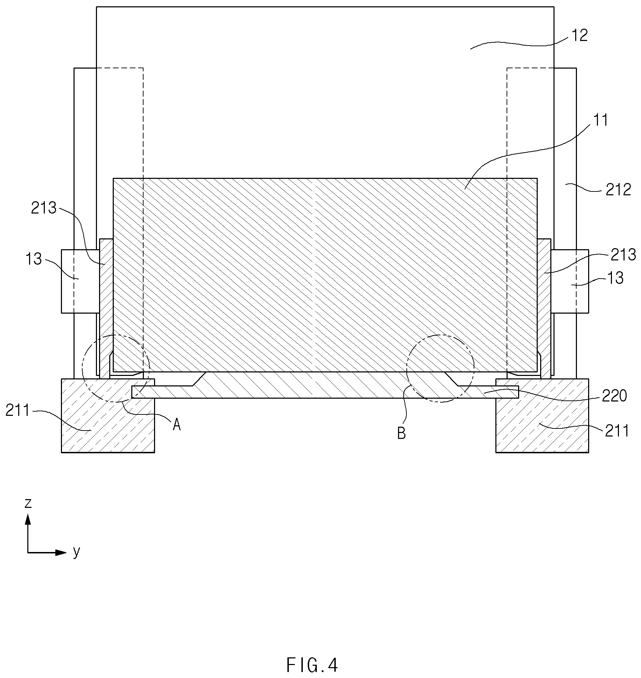

For example, as illustrated in FIGS. 3 and 4, the side surface support 210 may include a support block 211 disposed in an arrangement direction of the secondary battery 10, a first side surface support 212 provided in plurality to be spaced apart from each other and extending from the support block 211 in an upward-downward direction, and a second side surface support 213 protruding from the first side surface support 212 and having one surface disposed to face one side surface of the corner portion C of the secondary battery 10.

Here, the support block 211 is a component disposed in the arrangement direction of the secondary battery 10 and may have various configurations.

Specifically, as illustrated in FIG. 3, the support block 211 may extend in the X direction as a longitudinal direction when the plurality of secondary batteries 10 are disposed parallel in the X direction on the drawing.

The first side surface support 212 is a component, which is provided in plurality to be spaced apart from each other and extends upward from the support block 211, and may have various configurations.

In more detail, the plurality of first side surface supports 212 may be spaced apart from each other and extend upward from the support block 211 so as to be inserted with the secondary batteries 10 arranged vertically. That is, as illustrated in FIG. 3, the first side surface supports 212 may support the secondary batteries 10 in the X direction on the drawing.

Here, the first side surface supports 212 may be spaced a predetermined gap from each other so as to be inserted with the secondary batteries 10, and the gap may be equal to or greater than the thickness in a thickness direction (the X direction in FIG. 3) of the secondary battery 10.

The first side surface support 212 may have various shapes.

For example, the first side surface support 212 may have a plate shape as illustrated in FIG. 4. Here, the first side surface support 212 may have various shapes such as a shape having an edge curved or at least one side surface stepped, so as to minimize the damage of the secondary battery 10 during the accommodating of the secondary battery 10 in the tray 1 and the transfer of the secondary battery 10 accommodated in the tray 1.

The second side surface support 213 is a component, which protrudes from the first side surface support 212 and has the one surface disposed to face the one side surface of the corner portion C of the secondary battery 10, and may have various configurations.

For example, as illustrated in FIG. 3, the second side surface support 213 may protrude perpendicularly from the first side surface support 212. Accordingly, the second side surface support 213 may prevent the secondary battery 10, which is inserted between the plurality of first side surface supports 212, from separating in a direction (a direction Y on the drawing) perpendicular to an arrangement direction of the first side surface support 212.

The second side surface support 213 may have one surface disposed to face the one side surface of the corner portion C of the secondary battery 10. Here, the one surface of the second side surface support 213, which faces the one side surface of the corner portion C of the secondary battery 10, may include a recessed region corresponding to the corner portion C of the secondary battery 10, so as to avoid being in contact with the corner portion C of the secondary battery 10.

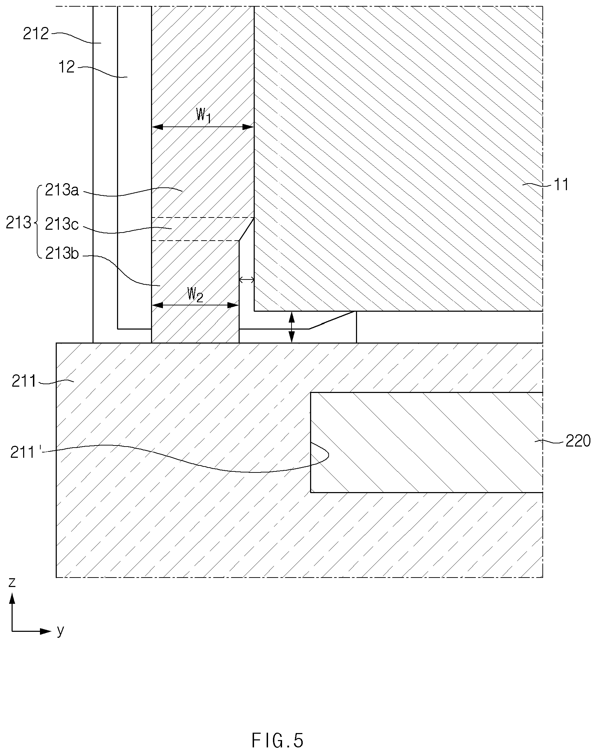

In more detail, as illustrated in FIG. 5, the second side surface support 213 may have a lower portion that is stepped so as to be spaced apart from the corner portion C of the secondary battery 10.

Accordingly, as illustrated in FIG. 5, the second side surface support 213 may include a first region 213a having a first width W₁, and a second region 213b having a second width W₂ smaller than the first width W₁.

Here, the first region 213a is a region having the first width W₁ and may be variously defined.

Here, the first width W₁ may be defined as a width from one surface disposed to face the secondary battery 10 to the other surface disposed in a direction opposite the one surface on the first region 213a.

The second region 213b is a region having the second width W₂ smaller than the first width W₁ and may be variously defined.

Here, the second width W₂ may be defined as a width from the one surface disposed to face the secondary battery 10 to the other surface disposed in a direction opposite the one surface on the second region 213b, and a width smaller than the first width W₁.

Here, for the second side surface support 213 to avoid being in contact with the corner portion C of the secondary battery 10, the second region 213b may be disposed in a region corresponding to the corner portion C of the secondary battery 10. Accordingly, the second region 213b may be spaced a difference between the first width W₁ and the second width W₂ from the corner portion C of the secondary battery 10.

The second side surface support 213 may further include a connection region 213c that is provided between the first region 213a and the second region 213b to connect the first region 213a and the second region 213b to each other.

Here, the connection region 213c is a component provided between the first region 213a and the second region 213b to connect the first region 213a and the second region 213b to each other and may have various configurations.

For example, as illustrated in FIG. 5, the connection region 213c may connect the first region 213a and the second region 213b to each other so as to be inclined. Accordingly, a stepped edge defined by the first region 213a and the second region 213b may minimize the damage such as linear scratches that may occur on the outer appearance of the secondary battery 10.

The lower portion support 220 is a component, which supports the lower portion of the secondary battery 10, and may have various configurations.

In more detail, as illustrated in FIG. 4, the lower portion support 220 may be disposed between the pair of side surface supports 210 and below the secondary battery 10 so as to support the lower portion of the secondary battery 10.

Here, the lower portion support 220 may be fixed to and installed in the frame part 100, the support block 211, or the like, which are described above, in various methods.

For example, as illustrated in FIG. 4, the lower portion support 220 may have both ends, each of which is fixed to the side surface support 210. In this case, as illustrated in FIG. 5, a groove 211' into which the end of the lower portion support 220 is fitted may be defined in the support block 211 of the side surface support 210 described above. Each of the both ends of the lower portion support 220 may be inserted into and fixed to the groove 211' defined in each of a pair of support blocks 211. In this case, as the lower portion support 220 is fitted into and fixed to the groove 211' of the support block 211, the lower portion support 220 may be easily installed in and detached from the side surface support 210. However, the fixing of the lower portion support 220 is not limited to the content described above.

The lower portion support 220 may have various shapes.

For example, as illustrated in FIG. 4, the lower portion support 220 may have a top surface that is stepped so as to avoid being in contact with the corner portion C of the secondary battery 10.

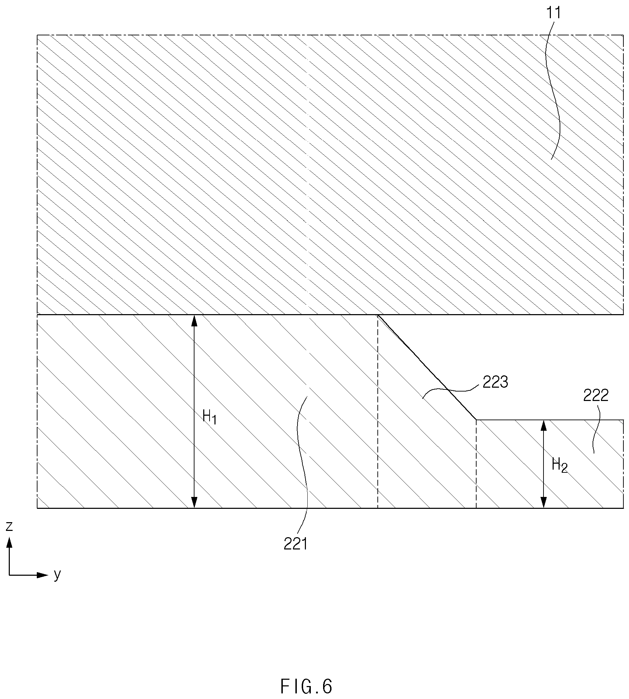

In more detail, as illustrated in FIG. 6, the lower portion support 220 may include a first region 221 having a first height H₁, and a second region 222 disposed at each of both sides of the first region 221 to have a second height H₂ lower than the first height H₁.

Here, the first region 221 is a region having the first height H₁ and may be variously defined.

Here, the first height H₁ may be defined as a height from one surface disposed to face the secondary battery 10 to the other surface disposed in a direction opposite the one surface on the first region 221.

The second region 222 is a region disposed at each of the both sides of the first region 221 to have the second height H₂ lower than the first height H₁ and may be variously defined.

Here, the second height H₂ may be defined as a height from the one surface disposed to face the secondary battery 10 to the other surface disposed in the direction opposite the one surface on the second region 222, and a height lower than the first height H₁.

That is, the first region 221 supports a central portion of a lower end of the secondary battery 10 and the second region 222 having the lower height than the first region 221 is disposed at each of the both sides of the first region 221 so that the lower portion support 220 has a stepped shape. Accordingly, the corner portion C of the secondary battery 10 and the tray 1 may avoid being in contact with each other.

As illustrated in FIG. 6, the lower portion support 220 may further include a connection region 223 provided between the first region 221 and the second region 222 to connect the first region 221 and the second region 222 to each other.

The connection region 223 is a component provided between the first region 221 and the second region 222 to connect the first region 221 and the second region 222 to each other and may have various configurations.

For example, as illustrated in FIG. 6, the connection region 223 may connect the first region 221 and the second region 222 to each other so as to be inclined. Accordingly, a stepped edge defined by the first region 221 and the second region 222 may minimize the damage such as linear scratches that may occur on the outer appearance of the secondary battery 10.

In the connection region 223, a surface on which the connection region 223 faces the secondary battery 10 may also be curved so as to more effectively prevent the occurrence of the linear scratches.

The lower portion support 220 may include various materials. Preferably, a synthetic resin material may be used so as to minimize the damage of the outer appearance of the secondary battery 10 because the lower portion support 220 is in contact with the central portion of the lower end of the secondary battery 10.

For example, the lower portion support 220 may be made of an acrylonitrile butadiene styrene (ABS) resin material including acrylonitrile, butadiene, and styrene.

Although the present invention has been described with reference to the limited embodiments and drawings, the present invention may be variously implemented by those of ordinary skill in the art within the scope of the appended claims.

### [Description of the Symbols]

1: Tray
10: Secondary battery
11: Electrode assembly
12: Pouch
13: Electrode lead
100: Frame part
200: Support
210: Side surface support
211: Support block
212: First side surface support
213: Second side surface support
213a: First region
213b: Second region
213c: Connection region
220: Lower portion support
221: First region
222: Second region
223: Connection region
W₁: First width
W₂: Second width
H₁: First height
H₂: Second height
C: Corner portion

## Claims

1. A secondary battery tray (1) configured to accommodate a secondary battery (10) comprising an electrode assembly (11) and a pouch (12) in which the electrode assembly (11) is accommodated, the secondary battery tray (1) comprising:
a frame part (100) in which an accommodation space in which the secondary battery (10) is accommodated is defined; and
a support (200, 210, 220) provided in the accommodation space to support the secondary battery (10),
wherein the support (200, 210, 220) is provided so as to be spaced apart from a corner portion (C) of the secondary battery (10), at which an edge of the electrode assembly (11) is disposed,
**characterized in that** the support (200, 210, 220) is detachably provided in the frame part (100) as a separate component from the frame part (100).

2. The secondary battery tray (1) of claim 1, wherein the support (200, 210, 220) comprises:
a side surface support (210-213) configured to support a side surface of the secondary battery (10) and provided in a pair to face each other; and
a lower portion support (220) configured to support a lower portion of the secondary battery (10).

3. The secondary battery tray (1) of claim 2, wherein the side surface support (210-213) comprises:
a support block (211) disposed in an arrangement direction (X) of the secondary battery (10);
a first side surface support (212) provided in plurality to be spaced apart from each other and extending upward from the support block (211); and
a second side surface support (213) protruding from the first side surface support (212) and having one surface disposed to face one side surface of the corner portion (C) of the secondary battery (10).

4. The secondary battery tray (1) of claim 3, wherein the second side surface support (213) has a region which corresponds to the corner portion (C) of the secondary battery (10) and is recessed.

5. The secondary battery tray (1) of claim 4, wherein the second side surface support (213) has a lower portion that is stepped so as to be spaced apart from the corner portion (C) of the secondary battery (10).

6. The secondary battery tray (1) of claim 4, wherein the second side surface support (213) comprises:
a first region (213a) having a first width (W1); and
a second region (213b) having a second width (W2) smaller than the first width (W1),
wherein the second region (213b) is disposed in the region corresponding to the corner portion (C) of the secondary battery (10).

7. The secondary battery tray (1) of claim 6, wherein the second side surface support (213) comprises a connection region (213c) provided between the first region (213a) and the second region (213b) to connect the first region (213a) and the second region (213b) to each other,
wherein the connection region (213c) connects the first region (213a) and the second region (213b) to each other so as to be inclined.

8. The secondary battery tray (1) of claim 3, wherein the lower portion support (220) has both ends, each of which is fixed to the side surface support (210-213).

9. The secondary battery tray (1) of claim 8, wherein a groove (211') into which the end of the lower portion support (220) is fitted is defined in the support block (211),
wherein each of the both ends of the lower portion support (220) is inserted into the groove (211') of the support block (211) provided in a pair to fix the lower portion support (220).

10. The secondary battery tray (1) of claim 2, wherein the lower portion support (220) has a top surface stepped.

11. The secondary battery tray (1) of claim 10, wherein the lower portion support (220) comprises:
a first region (221) having a first height (H1); and
a second region (222) disposed at each of both sides of the first region (221) to have a second height (H2) smaller than the first height (H1),
wherein the first region (221) supports a central portion of a lower end of the secondary battery (10).

12. The secondary battery tray (1) of claim 11, wherein the lower portion support (220) comprises a connection region (223) provided between the first region (221) and the second region (222) to connect the first region (221) and the second region (222) to each other,
wherein the connection region (223) connects the first region (221) and the second region (222) to each other so as to be inclined.

13. The secondary battery tray (1) of claim 2, wherein the lower portion support (220) comprises a synthetic resin material.

## Patentansprüche

1. Sekundärbatterieablage (1), das konfiguriert ist, um eine Sekundärbatterie (10) aufzunehmen, die eine Elektrodenanordnung (11) und einen Pouch (12) aufweist, in dem die Elektrodenanordnung (11) aufgenommen ist, wobei die Sekundärbatterieablage (1) Folgendes aufweist:
ein Rahmenteil (100), in dem ein Aufnahmeraum definiert ist, in dem die Sekundärbatterie (10) aufgenommen ist; und
eine Stütze (200, 210, 220), die in dem Aufnahmeraum vorgesehen ist, um die Sekundärbatterie (10) zu stützen,
wobei die Stütze (200, 210, 220) so vorgesehen ist, dass sie von einem Eckabschnitt (C) der Sekundärbatterie (10) beabstandet ist, an dem ein Rand der Elektrodenanordnung (11) angeordnet ist,
**dadurch gekennzeichnet, dass** die Stütze (200, 210, 220) in dem Rahmenteil (100) als eine von dem Rahmenteil (100) getrennte Komponente lösbar vorgesehen ist.

2. Sekundärbatterieablage (1) nach Anspruch 1, wobei die Stütze (200, 210, 220) Folgendes aufweist:
eine Seitenflächenstütze (210-213), die konfiguriert ist, um eine Seitenfläche der Sekundärbatterie (10) zu stützen, und die in einem Paar vorgesehen ist, um einander zugewandt zu sein; und
eine untere Abschnittsstütze (220), die konfiguriert ist, um einen unteren Abschnitt der Sekundärbatterie (10) zu stützen.

3. Sekundärbatterieablage (1) nach Anspruch 2, wobei die Seitenflächenstütze (210-213) Folgendes aufweist:
einen Stützblock (211), der in einer Anordnungsrichtung (X) der Sekundärbatterie (10) angeordnet ist;
eine erste Seitenflächenstütze (212), die in einer Mehrzahl vorgesehen ist, um voneinander beabstandet zu sein, und die sich von dem Stützblock (211) nach oben erstreckt; und
eine zweite Seitenflächenstütze (213), die von der ersten Seitenflächenstütze (212) vorsteht und eine Fläche aufweist, die angeordnet ist, um einer Seitenfläche des Eckabschnitts (C) der Sekundärbatterie (10) zugewandt zu sein.

4. Sekundärbatterieablage (1) nach Anspruch 3, wobei die zweite Seitenflächenstütze (213) einen Bereich aufweist, der dem Eckabschnitt (C) der Sekundärbatterie (10) entspricht und vertieft ist.

5. Sekundärbatterieablage (1) nach Anspruch 4, wobei die zweite Seitenflächenstütze (213) einen unteren Abschnitt aufweist, der abgestuft ist, um von dem Eckabschnitt (C) der Sekundärbatterie (10) beabstandet zu sein.

6. Sekundärbatterieablage (1) nach Anspruch 4, wobei die zweite Seitenflächenstütze (213) Folgendes aufweist:
einen ersten Bereich (213a) mit einer ersten Breite (W1); und
einen zweiten Bereich (213b) mit einer zweiten Breite (W2), die kleiner als die erste Breite (W1) ist,
wobei der zweite Bereich (213b) in dem Bereich angeordnet ist, der dem Eckabschnitt (C) der Sekundärbatterie (10) entspricht.

7. Sekundärbatterieablage (1) nach Anspruch 6, wobei die zweite Seitenflächenstütze (213) einen Verbindungsbereich (213c) aufweist, der zwischen dem ersten Bereich (213a) und dem zweiten Bereich (213b) vorgesehen ist, um den ersten Bereich (213a) und den zweiten Bereich (213b) miteinander zu verbinden,
wobei der Verbindungsbereich (213c) den ersten Bereich (213a) und den zweiten Bereich (213b) miteinander verbindet, um geneigt zu sein.

8. Sekundärbatterieablage (1) nach Anspruch 3, wobei die untere Abschnittsstütze (220) beide Enden aufweist, von denen jedes an der Seitenflächenstütze (210-213) befestigt ist.

9. Sekundärbatterieablage (1) nach Anspruch 8, wobei eine Nut (211'), in die das Ende der unteren Abschnittsstütze (220) eingepasst ist, in dem Stützblock (211) definiert ist,
wobei jedes der beiden Enden der unteren Abschnittsstütze (220) in die Nut (211') des Stützblocks (211) eingesetzt ist, der in einem Paar vorgesehen ist, um die untere Abschnittsstütze (220) zu befestigen.

10. Sekundärbatterieablage (1) nach Anspruch 2, wobei die untere Abschnittsstütze (220) eine abgestufte obere Fläche aufweist.

11. Sekundärbatterieablage (1) nach Anspruch 10, wobei die untere Abschnittsstütze (220) Folgendes aufweist:
einen ersten Bereich (221) mit einer ersten Höhe (H1); und
einen zweiten Bereich (222), der an jeder von beiden Seiten des ersten Bereichs (221) angeordnet ist, um eine zweite Höhe (H2) aufzuweisen, die kleiner als die erste Höhe (H1) ist,
wobei der erste Bereich (221) einen mittleren Abschnitt eines unteren Endes der Sekundärbatterie (10) stützt.

12. Sekundärbatterieablage (1) nach Anspruch 11, wobei die untere Abschnittsstütze (220) einen Verbindungsbereich (223) aufweist, der zwischen dem ersten Bereich (221) und dem zweiten Bereich (222) vorgesehen ist, um den ersten Bereich (221) und den zweiten Bereich (222) miteinander zu verbinden,
wobei der Verbindungsbereich (223) den ersten Bereich (221) und den zweiten Bereich (222) miteinander verbindet, um geneigt zu sein.

13. Sekundärbatterieablage (1) nach Anspruch 2, wobei die untere Abschnittsstütze (220) ein synthetisches Harzmaterial aufweist.

## Revendications

1. Plateau de batterie secondaire (1) configuré pour accueillir une batterie secondaire (10) comprenant un ensemble d'électrodes (11) et une poche (12) dans lesquels l'ensemble d'électrodes (11) est installé, le plateau de batterie secondaire (1) comprenant :
une partie de cadre (100) dans laquelle est défini un espace d'hébergement où la batterie secondaire (10) est logée ; et
un support (200, 210, 220) agencé dans l'espace d'hébergement pour supporter la batterie secondaire (10),
le support (200, 210, 220) étant agencé de manière à être espacé d'une partie d'angle (C) de la batterie secondaire (10), où un bord de l'ensemble d'électrodes (11) est disposé,
**caractérisé en ce que** le support (200, 210, 220) est agencé de façon détachable dans la partie de cadre (100) en tant que composant distinct de la partie du cadre (100).

2. Plateau de batterie secondaire (1) selon la revendication 1, le support (200, 210, 220) comprenant:
un support de surface latérale (210-213) configuré pour supporter une surface latérale de la batterie secondaire (10) et agencé en paire afin qu'ils se fassent face ; et
un support de partie inférieure (220) configurée pour supporter une partie inférieure de la batterie secondaire (10).

3. Plateau de batterie secondaire (1) selon la revendication 2, le support de surface latérale (210-213) comprenant:
un bloc de support (211) disposé dans le sens de l'agencement (X) de la batterie secondaire (10) ;
un premier support de surface latérale (212) agencé en pluralité afin d'être espacés les uns des autres, et s'étendant vers le haut depuis le bloc de support (211) ; et
un deuxième support de surface latérale (213) dépassant du premier support de surface latérale (212), et dont une surface est disposée de façon à faire face à une surface latérale de la partie d'angle (C) de la batterie secondaire (10).

4. Plateau de batterie secondaire (1) selon la revendication 3, le deuxième support de surface latérale (213) possédant une zone correspondant à la partie d'angle (C) de la batterie secondaire (10) et étant encastré.

5. Plateau de batterie secondaire (1) selon la revendication 4, le deuxième support de surface latérale (213) possédant une partie inférieure étagée de façon à être espacée de la partie d'angle (C) de la batterie secondaire (10).

6. Plateau de batterie secondaire (1) selon la revendication 4, le deuxième support de surface latérale (213) comprenant:
une première zone (213a) présentant une première largeur (W1) ; et
une deuxième zone (213b) présentant une deuxième largeur (W2) inférieure à la première largeur (W1),
la deuxième zone (213b) étant disposée dans la zone correspondant à la partie d'angle (C) de la batterie secondaire (10).

7. Plateau de batterie secondaire (1) selon la revendication 6, le deuxième support de surface latérale (213) comprenant une zone de connexion (213c) agencée entre la première zone (213a) et la deuxième zone (213b) pour relier l'une à l'autre la première zone (213a) et la deuxième zone (213b),
la zone de connexion (213c) reliant la première zone (213a) et la deuxième zone (213b) entre elles de manière à être inclinées.

8. Plateau de batterie secondaire (1) selon la revendication 3, le support de partie inférieure (220) possédant les deux bouts, chacun étant fixé au support de surface latérale (210-213).

9. Plateau de batterie secondaire (1) selon la revendication 8, une cannelure (211') dans laquelle le bout du support de partie inférieure (220) est installé étant définie dans le bloc de support (211),
chacun des deux bouts du support de partie inférieure (220) étant insérée dans la cannelure (211) du bloc de support (211) agencé en tant que paire pour fixer le support de partie inférieure (220).

10. Plateau de batterie secondaire (1) selon la revendication 2, le support de partie inférieure (220) possédant une surface supérieure étagée.

11. Plateau de batterie secondaire (1) selon la revendication 10, le support de partie inférieure (220) comprenant:
une première zone (221) présentant une première hauteur (H1) ; et
une deuxième zone (222) disposée sur chacun des deux côtés de la première zone (221) de façon à présenter une deuxième hauteur (H2) inférieure à la première hauteur (H1),
la première zone (221) supportant une partie centrale d'une extrémité inférieure de la batterie secondaire (10).

12. Plateau de batterie secondaire (1) selon la revendication 11, le support de partie inférieure (220) comprenant une zone de connexion (223) agencée entre la première zone (221) et la deuxième zone (222) pour relier l'une à l'autre la première zone (221) et la deuxième zone (222),
la zone de connexion (223) reliant la première zone (221) et la deuxième zone (222) entre elles de manière à être inclinées.

13. Plateau de batterie secondaire (1) selon la revendication 2, le support de partie inférieure (220) comprenant une matière de résine synthétique.
